# FASCICULE DE BREVET EUROPEEN

(11) **EP 2 766 146 B1**
(45) Date de publication et mention de la délivrance du brevet: **18.11.2015**
(21) Numéro de dépôt: 12770492.2
(22) Date de dépôt: 11.10.2012
(51) Int. Cl.: B23K 26/03, B23K 26/14, B23K 26/38, B23K 26/40

(54) **APPAREIL ET PROCEDE DE DECOUPE AU LASER A IMPULSIONS DE GAZ ASSERVIES EN FREQUENCE OU EN PRESSION**
VORRICHTUNG UND VERFAHREN ZUM LASERSCHNEIDEN MIT EINEM LASER MIT GASIMPULSEN UND GESTEUERTER FREQUENZ ODER GESTEUERTEM DRUCK
APPARATUS AND METHOD FOR LASER CUTTING WITH A LASER IMPLEMENTING GAS PULSES, THE FREQUENCY OR PRESSURE OF WHICH IS CONTROLLED

(30) Priorité: 13.10.2011 FR 1159277
(43) Date de publication de la demande: 20.08.2014
(73) Titulaire: Commissariat à l'Énergie Atomique et aux Énergies Alternatives, 75015 Paris (FR)
(72) Inventeur: ALFILLE, Jean-Pascal, 21000 Dijon (FR)
(74) Mandataire: Ahner, Philippe
(86) Numéro de dépôt international: PCT/EP2012/070169
(87) Numéro de publication internationale: WO 2013/053832

(56) Documents cités:
- EP-A1- 1 916 053
- EP-A2- 0 533 387
- WO-A2-2006/045431
- DE-A1- 19 852 302
- US-A- 6 075 220

## Description

Le sujet de l'invention est un appareil et un procédé de découpe au laser à impulsions de gaz asservies en fréquence ou en pression.

La découpe de matériaux notamment métalliques au moyen de lasers de puissance, comme les lasers au *CO*₂ et les lasers Nd-YAG, est une technique bien implantée dans l'industrie depuis plusieurs décennies.

Un procédé classique consiste à travailler avec un laser à faisceau pulsé. A chaque impulsion, typiquement de 100 J pour une durée d'environ 5 ms, la matière à découper est localement portée à une température supérieure à celle de la fusion, un petit volume de métal très liquide et donc à faible viscosité est obtenu presque immédiatement. L'appareil est complété par un auxiliaire de soufflage de gaz accompagnant le laser dirigé vers la découpe et qui expulse de façon efficace le métal fondu sous forme de fines scories, sans que ces scories adhèrent aux flancs de la découpe. Ce processus est presque instantané, et l'impulsion suivante du laser attaque une portion suivante du métal alors que les scories précédentes ont disparu de la découpe. Ce procédé permet donc une découpe efficace. L'évacuation des scories liquides est par ailleurs trop rapide pour que le gaz de soufflage puisse les solidifier tant qu'elles sont présentes dans la découpe, ce qui ne crée aucun obstacle à l'évacuation.

Ce procédé souffre malheureusement d'une limitation de puissance des lasers à impulsions produits jusqu'à ce jour. La découpe de pièces épaisses, de l'ordre de quelques centimètres, imposerait l'emploi de lasers de plusieurs kilowatts. Seuls des lasers à faisceau continu possèdent aujourd'hui cette puissance. Leur application au procédé précédent ne donne pas de résultats convenables puisqu'un bain de matière fondue est sans cesse formé. Ce bain continu est difficilement évacué par le gaz de soufflage et tend donc à s'accumuler, tout en subissant le refroidissement du gaz qui augmente sa viscosité avant de le solidifier. Le métal d'abord fondu peut alors demeurer dans la découpe et même la reboucher localement, sans que l'accroissement de la puissance du laser apporte une amélioration.

L'invention trouvera utilité avant tout pour les lasers à faisceau continu d'une puissance supérieure à 1 kW, au-delà de la puissance couramment atteinte par les lasers à faisceau pulsé.

Il est connu (EP-A-0 533 387 ou US-A-2008/115862) que le débit du gaz de soufflage peut avantageusement être pulsé afin d'éjecter l'une après l'autre des petites quantités de matière fondue et de rétablir une évacuation efficace des scories hors de la découpe.

S'il est vrai que le procédé est alors amélioré, ce perfectionnement est toutefois insuffisant dans certaines circonstances, où il est apparu que des défauts de découpe pouvaient tout de même subsister.

Un domaine où l'invention trouvera emploi en particulier est la découpe dans des milieux très hostiles (nucléaire, biologie, chimie) où la tête de découpe est déplacée par un bras de robot ou un autre appareil dont les mouvements ne sont pas très précis et où les paramètres de découpe comme la distance de la tête de découpe à la pièce à découper et sa vitesse sont approximatifs ; des vibrations sont en plus souvent observées ; et les caractéristiques des pièces à découper peuvent aussi être connues approximativement ou être très variables, et notamment leurs épaisseurs. Tout cela explique que les valeurs idéales des paramètres de découpe seront inconnues ou susceptibles de changer sans cesse, sans qu'on puisse appliquer ces changements dans le procédé, de sorte que des résultats insuffisants, y compris une découpe incomplète, peuvent être observés.

Il est apparu que les conditions de découpe dépendaient fortement de la fréquence et de la pression des impulsions de gaz, de sorte que, conformément à l'invention, on choisit d'ajuster au moins un de ces paramètres dans un asservissement pour assurer de bonnes conditions de coupe.

L'invention est donc relative à un procédé de découpe automatique au laser comprenant un soufflage d'un débit de gaz vers un lieu de découpe afin de balayer des scories et des gaz produits par la découpe, le soufflage étant réalisé par impulsions, caractérisé en ce qu'il consiste à mesurer en continu une intensité de rétrodiffusion de lumière du laser et à modifier une fréquence des impulsions de manière à maintenir ladite intensité à un minimum.

La fréquence est avantageusement modifiée par pas, dont la valeur peut être comprise entre 1 Hz et 3 Hz.

Les fréquences de soufflage peuvent rester comprises entre des limites au-delà desquelles on estime que d'autres mesures que le réglage du soufflage doivent être prises pour assurer une découpe satisfaisante. Ces limites peuvent être 2 Hz et 20 Hz par exemple. Quand elles sont atteintes, une augmentation de la puissance du laser est imposée, cette augmentation étant avantageusement temporaire.

Selon certains aménagements optionnels ou avantageux, le faisceau du laser peut passer par la buse de soufflage, le faisceau du laser et le gaz de soufflage ayant des directions parallèles.

Il est alors avantageux, cependant, que la buse ait une section d'ouverture oblongue, à travers une extrémité de laquelle le faisceau du laser passe. Cette disposition permet de souffler le gaz immédiatement en arrière du faisceau, là où la matière fondue vient d'apparaître.

La section d'ouverture oblongue peut être rectangulaire, elliptique, etc. Une forme privilégiée est toutefois obtenue quand la buse est divisée en deux portions inégales, par un resserrement, une des portions, plus petite, étant traversée par le faisceau du laser, une autre des portions, plus grande, étant traversée par le gaz de soufflage.

L'auxiliaire de soufflage peut comprendre aussi une pluralité de buses toutes dirigées vers le lieu de découpe, dont une des buses est dirigée parallèlement au faisceau du laser, et une autre des buses obliquement à ce faisceau. Leurs souffles sont donc dirigés dans des directions différentes et convergentes, ce qui est susceptible d'améliorer l'évacuation des scories. Une pluralité de buses obliques peut aussi être préférée, de manière à fournir des débits de soufflage respectifs parallèles entre eux et croisant le faisceau du laser à des portions différentes de ce faisceau et de façon à exercer une évacuation efficace sur une plus grande profondeur de la pièce découpée.

Il est à envisager que les impulsions de soufflage soient faites avec des décalages de phases entre les buses quand une pluralité d'entre elles existe, encore afin d'améliorer l'évacuation des scories.

Une bonne façon de créer les impulsions de gaz est obtenue si l'auxiliaire comprend un distributeur à organe rotatif dans le conduit d'alimentation, l'organe comprenant au moins un orifice d'ouverture du conduit d'alimentation prolongeant périodiquement le conduit d'alimentation pour permettre les impulsions du soufflage. Avantageusement, l'orifice et le conduit d'alimentation ont des sections rectangulaires à côtés parallèles et perpendiculaires à une direction de déplacement de l'organe devant le conduit d'alimentation. Cette disposition permet d'obtenir des impulsions mieux dessinées.

Des fréquences égales ou non des impulsions de soufflage peuvent être retenues pour les buses quand une pluralité d'entre elles existe, sans que des caractéristiques meilleures aient alors été constatées sans équivoque.

Et les pressions de crête des impulsions peuvent être comprises entre 3 et 15 bars. Il est à noter qu'un arrêt complet du soufflage entre les impulsions est déconseillé, de sorte qu'une pression intermédiaire entre 0,5 et 1 bar peut être préconisée entre les impulsions. Toutes ces pressions sont présentes à la sortie de la buse ou de chacune d'entre elles selon le cas.

En variante, le même effet d'amélioration de la découpe peut être obtenu en asservissant la pression des impulsions de gaz plutôt que leur fréquence, ou en asservissant ces deux paramètres à la fois. La pression peut être asservie entre 1 et 15 bars par pas de 0,5 bar, ou plus généralement de moins d'un bar. Le procédé d'asservissement est identique.

L'invention sera maintenant décrite en détail en liaison aux figures suivantes :
- la figure 1 illustre un appareil de découpe au laser,
- la figure 2 représente une tête de découpe,
- la figure 3 représente un distributeur rotatif de gaz,
- la figure 4 représente une coupe A-A prise sur la figure 3,
- la figure 5 illustre une variante de l'extrémité tête de découpe,
- les figures 6A, 6B, 6C et 6D illustrent des sections de buses de soufflage,
- la figure 7 est un diagramme temporel de soufflage,
- et la figure 8 est un organigramme du procédé de l'invention.

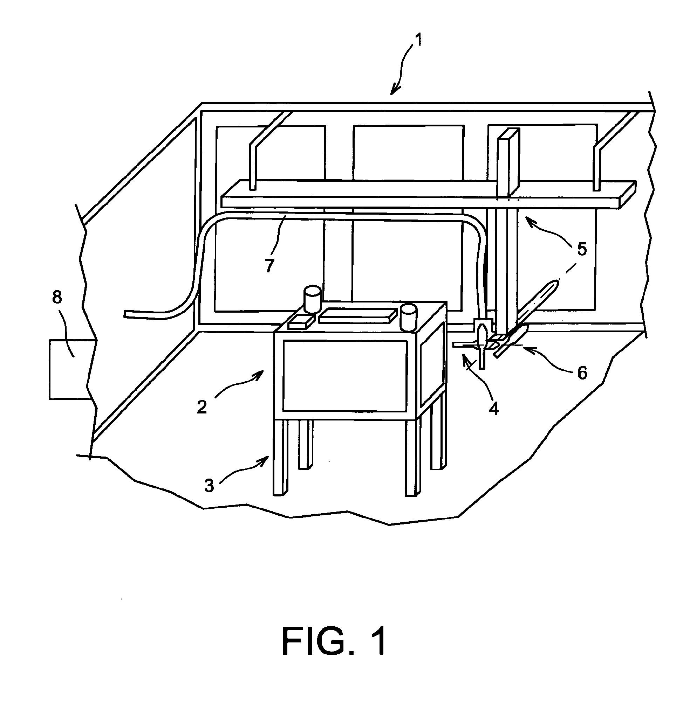

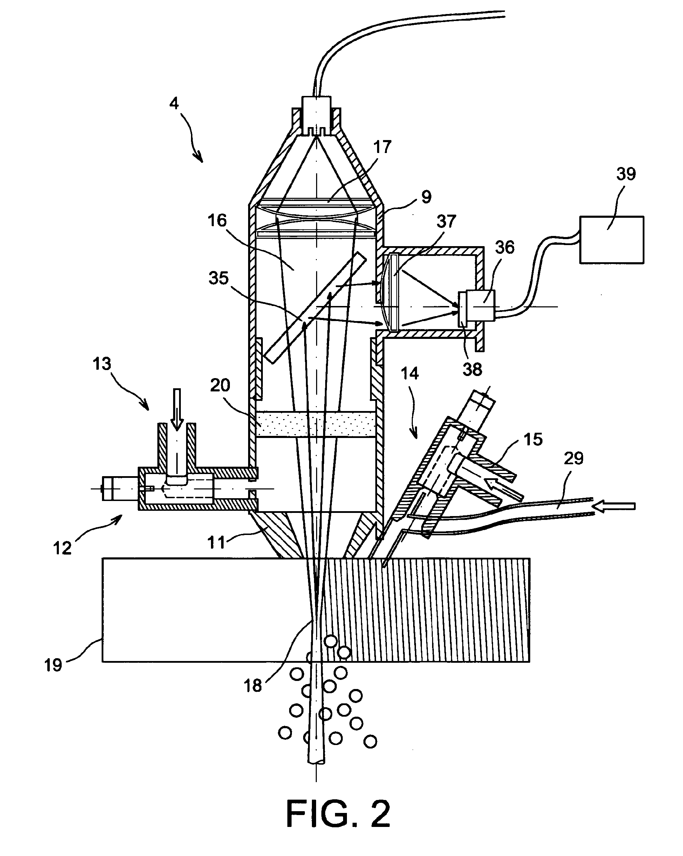

La figure 1 représente schématiquement un appareil de découpe au laser et son environnement. L'appareil est logé dans une cellule (1) dite de casse. Un objet à découper tel qu'une boîte à gant utilisée dans certaines industries, est posée sur un support (3) dans la cellule (1). L'appareil (4) est suspendu à la paroi de la cellule (1) par l'intermédiaire d'une table à 5 axes (5). La table (5) consiste en un groupe de pièces coulissant les unes dans les autres de manière à permettre des déplacements de l'appareil suivant les trois axes principaux de translation X, Y et Z, et en un poignet (6) articulé à la table (5) pour soumettre l'appareil (4) à des rotations θ et ϕ autour de deux axes perpendiculaires entre eux. Un câble (7) flexible suspendu à la table (5) sur une partie de sa longueur relie l'appareil (4) à une installation de commande (8) ; il comprend une fibre optique et un conduit apportant respectivement la lumière du laser et le gaz de soufflage à l'appareil (4) à partir de générateurs non représentés dans l'installation de commande (8). L'installation (8) est encore utilisée pour déplacer l'appareil (4) en agissant sur la table (5) et le poignet (6) de manière à le placer et l'orienter devant toutes les faces de la boîte (2), qui pourra être découpée complètement par des passes entrecroisées. Tous ces éléments étant connus, ils ne seront pas illustrés plus en détail et on passe au commentaire de la figure 2. L'appareil (4) comprend une tête (9) cylindrique aux extrémités coniques et qui est soutenu par le poignet (6). L'extrémité supérieure de la tête (9) livre passage à l'extrémité de la fibre optique (10) et l'extrémité inférieure est une buse (11) de soufflage. La tête (9) porte un premier distributeur de gaz (12) auquel aboutit une première extrémité (13) du conduit de gaz, et un second distributeur d'alimentation (14), auquel aboutit une seconde extrémité (15) du conduit de gaz. Le premier distributeur (12) a une extrémité de sortie traversant la paroi de la tête (9), mais le second (14) reste extérieur à la tête (9) et son extrémité de sortie forme un angle avec elle, que l'on peut obtenir en l'accrochant de façon tangente à la paroi extérieure conique de la buse (11). Le faisceau de laser (16) traverse la tête (9) vers le bas et en sort par la buse (11) ; il est focalisé par des lentilles (17) placées au sommet de la tête (9) de manière à prendre une section resserrée un peu au-dessous de la buse (11), soit localisée à la surface de la plaque, soit à mi-profondeur d'une plaque (19) à découper. Il traverse encore une vitre (20) divisant l'intérieur de la tête (9) afin de servir de barrière au gaz émis par le premier distributeur (12).

Le dispositif comprend encore une lame semi-réfléchissante (35) sur le chemin du faisceau de laser (16), qui laisse passer la lumière vers la plaque (19), mais réfléchit celle qui est renvoyée de cette plaque (19). Comme la lame semi-réfléchissante (35) est oblique, la lumière est renvoyée vers un détecteur (36) situé sur le côté de la tête (9), et une lentille de focalisation (37) ainsi qu'un filtre interférentiel (38) sont disposés devant le détecteur (36) pour focaliser la lumière renvoyée sur lui et laisser passer seulement la longueur d'onde du faisceau de laser (16). Le détecteur (36) est relié à un dispositif d'asservissement (39) non représenté en détail et qui commande le laser ainsi que le soufflage du gaz d'une façon qu'on décrira plus loin.

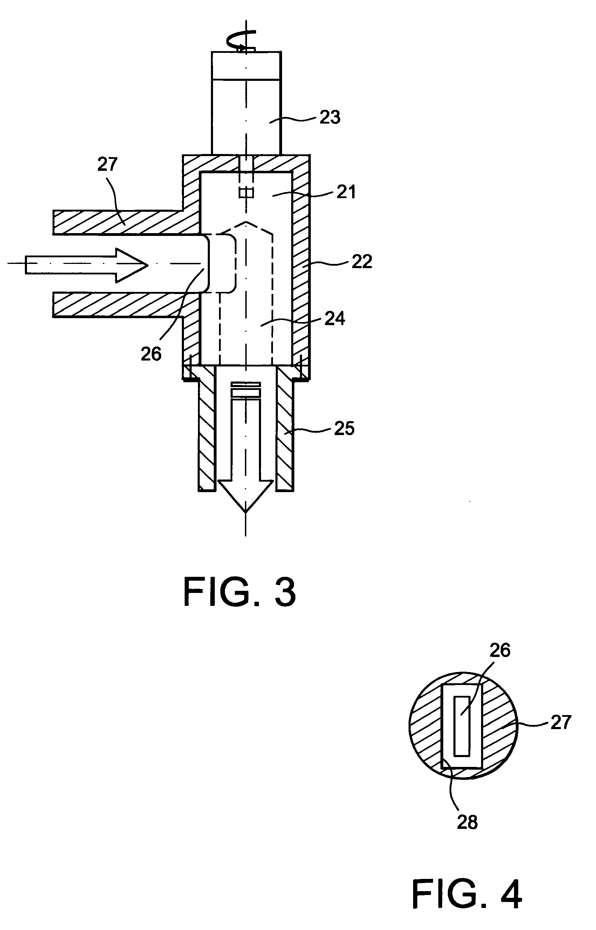

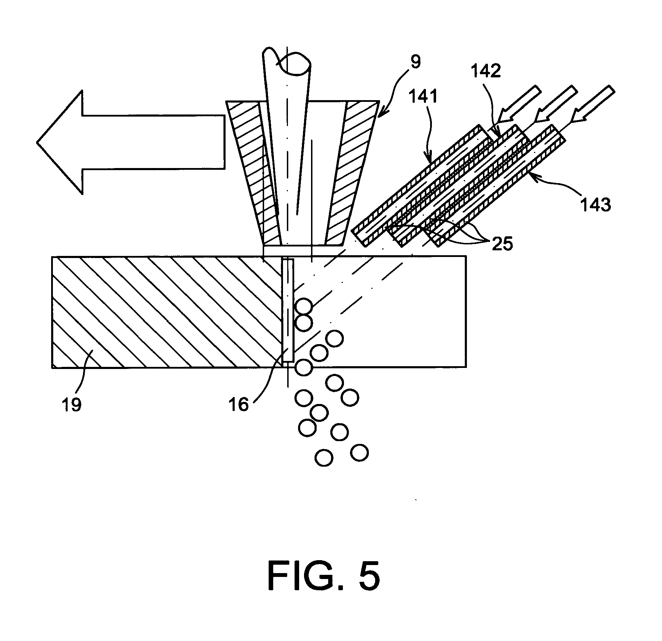

Chacun des distributeurs (12 et 14) comprend, comme on le représente à la figure 3, un barillet (21) monté dans un logement cylindrique (22) et rotatif sous l'action d'un moteur (23). Le barillet (21) comprend un évidement (24) coaxial s'ouvrant vers une buse de sortie (25) et une ou plusieurs fentes (26) distribuées autour de sa périphérie et communiquant à l'évidement (24) ; la rotation du barillet (21) les fait passer régulièrement devant l'extrémité d'entrée (27) du distributeur où se branche l'extrémité (13 ou 15) du conduit de gaz ; la figure 4 montre que les fentes (26) sont de section rectangulaire, avec des grands côtés dans la direction axiale du barillet (21), et que la section (28) interne de l'orifice d'entrée (27) est aussi rectangulaire, avec encore des grands côtés dirigés dans l'axe du barillet (21). Le distributeur (14) est semblable au distributeur (12) (hormis éventuellement les dimensions ou les proportions) si ce n'est qu'il comprend encore un conduit d'introduction de poudre (29), d'ailleurs optionnel. La poudre peut aider à la projection des scories en leur communiquant son énergie cinétique (elle sera alors souvent de la même matière que la plaque), ou induire une réaction exothermique au contact du bain fondu, qui accroît sa température. La figure 5 représente schématiquement une conception dérivée de la figure 2, dans laquelle le distributeur (14) oblique serait fourni à plusieurs exemplaires (141, 142, 143, etc.), leurs orifices de sortie étant tous placés parallèlement entre eux et en faisant un angle avec la direction principale de la tête (9), et superposés de façon à croiser le faisceau de laser (16) à des profondeurs différentes de la plaque (19).

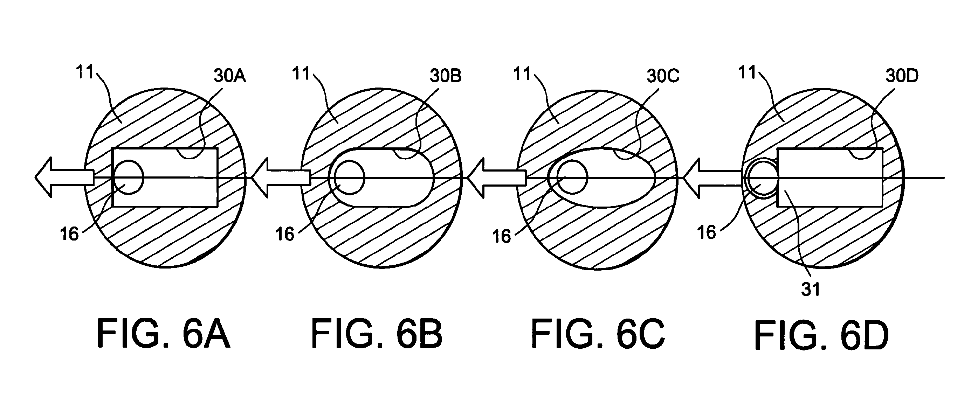

Le faisceau du laser (16) est projeté vers la plaque (19) et la perce. L'écoulement principal de gaz à travers le premier distributeur (12) et la tête (9) projette les scories de fusion vers le bas. Le distributeur (14) ou les distributeurs (141, 142, 143) exercent un soufflage supplémentaire vers la limite antérieure de la découpe et complètent l'action du soufflage principal. Les barillets (21) tournants obturent les distributeurs de façon répétée et hachent les débits de gaz de soufflage en leur donnant un caractère pulsé. On a vu que cette caractéristique assurait une bonne évacuation des scories hors de la plaque (19). De nombreuses façons de produire un soufflage convenable existent à condition que ce principe de débit pulsé soit respecté, en faisant varier le nombre et les directions des distributeurs et de leurs orifices de sortie par exemple. Il faut toutefois souligner que la buse (11) a avantageusement un orifice oblong et dirigé dans la direction de la découpe de manière que le faisceau de laser (16) soit en avant de cet orifice et que le soufflage du gaz issu du premier distributeur (12) se produise un peu derrière le faisceau de laser (16), là où les scories liquides se sont formées. Les figures 6A, 6B, 6C et 6D illustrent respectivement un orifice (30A) rectangulaire, un orifice (30B) oblong aux extrémités arrondies, un orifice (30C) elliptique, et un orifice (30D) en forme complexe de trou de serrure comprenant une portion principale rectangulaire dévolue au soufflage de gaz et une portion antérieure circulaire ajustée au diamètre de faisceau du laser (16) et servant à son passage, ces parties étant réunies par un resserrement (31).

La puissance du laser à faisceau continu peut être de plusieurs kW en fonction de l'épaisseur à couper, typiquement de plusieurs centimètres.

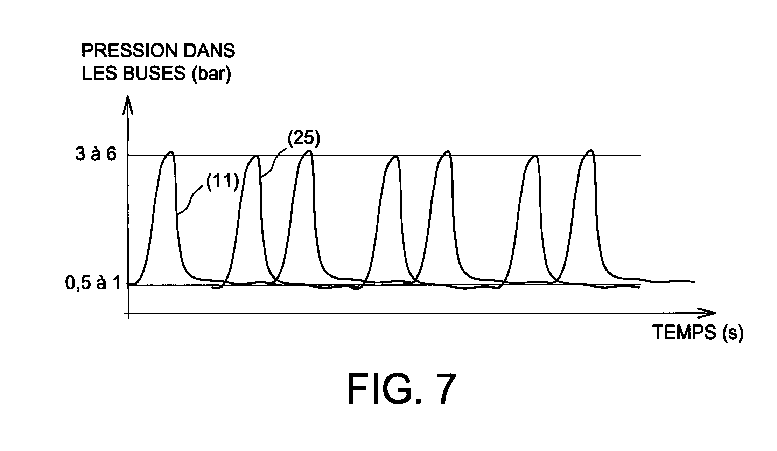

Il semble avantageux de choisir des phases de soufflage différentes pour les différents distributeurs, comme le montre le graphique de la figure 7, qui illustre les pressions émises par la buse (11) et par la buse de sortie (25) du second distributeur (14). On voit que le déphasage est de 4π/3, les fréquences étant constantes. Les pressions sont également les mêmes, et comprises entre un niveau supérieur d'une valeur de 3 à 15 bars par exemple et une valeur inférieure de 0,5 et 1 bar par exemple. Il est en effet désavantageux d'arrêter complètement le soufflage, ce qui permettrait des remontées, dangereuses pour la tête (9) ou son bon fonctionnement, de fumées ou même de scories liquides. La pression résiduelle peut être obtenue avec une fréquence suffisante des impulsions ou par des orifices supplémentaires à travers le barillet (21). Les impulsions de gaz peuvent avoir des durées de 1 ms à 100 ms chacune. Un ajustement des durées d'impulsion peut aussi être obtenu en faisant varier la vitesse de rotation du barillet (21) quand les orifices (26) du barillet (21) passent devant l'extrémité (13 ou 15) du conduit de gaz. Un asservissement facile à réaliser peut être réalisé pour cela, en munissant le barillet (21) d'un codeur de position angulaire. L'ajustement de la vitesse moyenne de rotation du barillet (21) permet d'ajuster la fréquence des impulsions de soufflage, et donc dans d'améliorer l'évacuation des débris de coupe. Plus précisément, la vitesse moyenne de rotation du barillet (21) est double et comprend une première vitesse, invariable, utilisée pour faire passer les orifices (26) devant l'extrémité (13 ou 15) du conduit de gaz avec une durée d'impulsion constante, et une seconde vitesse, variable, utilisée pour les autres positions angulaires du barillet (21) afin de faire varier la durée entre chacune des impulsions de soufflage de gaz selon la caractéristique de l'invention.

On passe maintenant à la description des aspects les plus importants de l'invention. On a déjà mentionné que les incertitudes et les perturbations inévitables dans un grand nombre de situations réelles mettaient en échec les tentatives de régler au mieux à l'avance les paramètres de découpe, et qu'un échec de celle-ci consécutif à une évacuation insuffisante des scories et de la matière fondue ne pouvait pas être exclu.

Une portion plus importante de la lumière du faisceau de laser (16) est rétrodiffusée quand la découpe devient insuffisante, et une partie arrive au détecteur (36) après avoir pénétré dans la tête de découpe (9) et été réfléchie par la lame semi-réfléchissante (35). Le dispositif d'asservissement (39) mesure sans cesse l'intensité de la lumière rétrodiffusée qui arrive au détecteur (36).

Or il est apparu qu'il existe un débit de gaz de soufflage pour lequel la qualité de découpe est optimale : si le soufflage de gaz est insuffisant, l'évacuation des scories et des matières fondues est difficile puisque l'énergie cinétique totale du débit de gaz n'est pas suffisante ; mais si ce débit est trop important, le refroidissement du métal fondu est aussi plus important, ce qui augmente sa viscosité et peut le resolidifier précocement en augmentant le risque qu'il soit retenu et ne rebouche la saignée.

L'asservissement est donc fondé sur une variation continuelle du débit de soufflage de gaz et notamment de la fréquence des impulsions, en s'efforçant de maintenir le signal du détecteur (36) au niveau le plus bas. Si toutefois le minimum ainsi obtenu est à une valeur trop élevée, la puissance du faisceau du laser (11) sera augmentée afin de rendre la découpe plus énergique. Cet asservissement concerne tous les débits de gaz quand il y en a plusieurs.

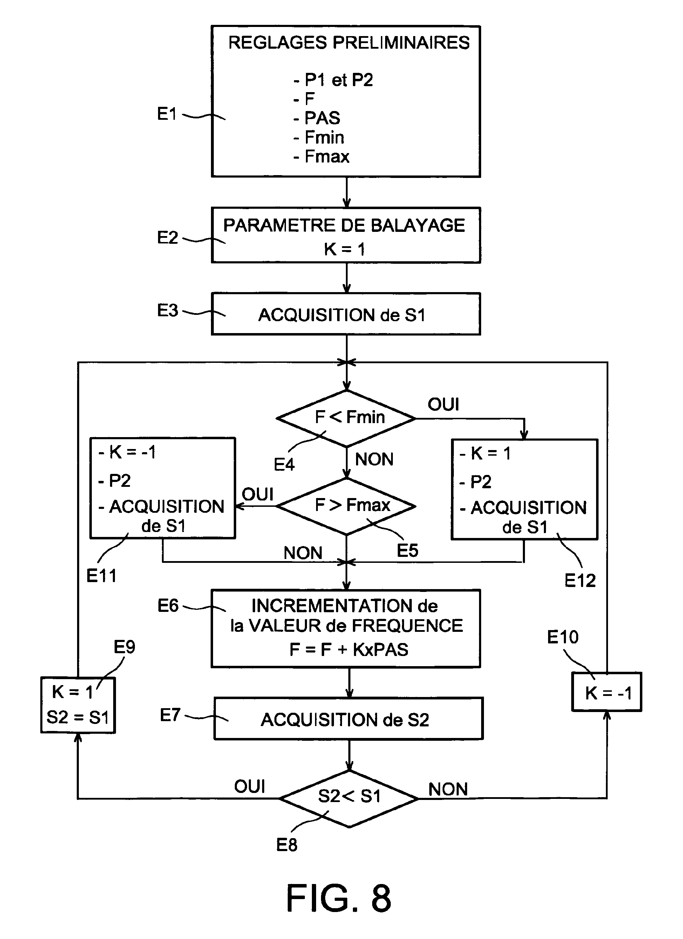

On passe au commentaire de la figure 8. La première étape E1, faite avant de procéder à la découpe, consiste en l'introduction de réglages préliminaires parmi lesquels on peut citer la puissance du laser (4) (par exemple P1=6 kW en circonstances normales et P2=7 à 8 kW en circonstances exceptionnelles), une fréquence des impulsions de gaz F=10 Hz, un incrément de variation de cette fréquence (PAS=2 Hz), une fréquence minimale de 5 Hz, une fréquence maximale de 15 Hz ; toutes ces valeurs sont données à titre d'exemple, des limites de 2 Hz et 20 Hz pouvant aussi être proposées. A l'étape suivante E2, un paramètre de modification de fréquence K est réglé provisoirement, par exemple à K=1, et à l'étape suivante E3, une valeur S1 mesurée par le détecteur (36) est enregistrée.

La suite du programme se déroule en boucle. Il est d'abord vérifié successivement aux étapes E4 et E5 que la fréquence F des impulsions du gaz est comprise entre le minimum et le maximum Fₘᵢₙ et Fₘₐₓ. Si tel est le cas, la fréquences des impulsions est modifiée et devient égale à F+KxPAS (E6). A l'étape suivante E7, une nouvelle mesure S2 du détecteur (36) est enregistrée. Si elle est inférieure à la valeur antérieure S1 (E8), le paramètre de balayage K est maintenu à 1, la valeur de S1 est remplacée par celle de S2 (E9) et une nouvelle boucle est accomplie à partir de E4. Dans le cas contraire (E10), K devient égal à -1 et ici encore une nouvelle boucle est accomplie à partir de E4. L'effet de cette boucle est donc que la fréquence des impulsions de balayage est sans cesse modifiée tout en mesurant la lumière rétrodiffusée vers le détecteur (36). Si cette valeur diminue, ce qui signifie que la découpe est meilleure, le sens de balayage est favorable et ce dernier est poursuivi dans les mêmes conditions ; si au contraire cette valeur augmente, le balayage reprend dans le sens opposé pour rechercher un minimum de valeur détectée.

Si l'étape E4 révèle que la fréquence est passée au-dessous du minimum, le paramètre K est fixé à 1, le laser est mis à la puissance supérieure P2 et une acquisition du signal S1 est faite alors (E11) ; et si l'étape E5 révèle que la fréquence est devenue supérieure à la fréquence maximale, K est fixé à -1, la puissance P2 est instaurée et une acquisition du signal S1 est faite de nouveau (E12). On revient ensuite à l'étape E6 dans les deux cas. On revient donc dans la zone de balayage souhaitée pour y rechercher le minimum de la mesure du détecteur 36, en considérant que l'augmentation de la puissance du laser donnera une découpe satisfaisante même si on est en présence d'un surcroît d'épaisseur ou de perturbations dans le procédé. Cette augmentation de puissance est temporaire et cesse automatiquement, avec un retour à P1 après une durée déterminée sans que le processus soit altéré par ailleurs.

Dans une autre réalisation de l'invention, dont l'effet est identique sur la qualité de découpe, la fréquence des impulsions est constante mais c'est la pression du gaz dans les buses de soufflage qui est asservie, par exemple en modifiant le degré d'ouverture de vannes réglables. Pour une pression nominale de 5 bars par exemple, les limites de pression peuvent être de 1 bar et 15 bars, et le pas d'incrément de pression de 0,5 bar. Le procédé est exactement le même que précédemment, si ce n'est que les valeurs ci-dessus remplacent P1, P2 et PAS, et que la vitesse de rotation du barillet (21) reste constante.

Il est à envisager encore de réaliser un asservissement double en faisant varier les deux paramètres de fréquence et de pression des impulsions, par exemple alternativement par séries, ou en privilégiant le travail sur un paramètre quand l'autre a atteint un seuil ou ne permet pas des améliorations aussi rapides.

## Revendications

1. Procédé de découpe automatique au laser, comprenant un soufflage d'un débit de gaz vers un lieu de découpe afin de balayer des scories et des gaz produits par la découpe, le soufflage étant réalisé par impulsions, **caractérisé en ce qu'**il consiste à mesurer en continu une intensité de rétrodiffusion de lumière du laser et à modifier soit une fréquence, soit une pression, soit à la fois une fréquence et une pression des impulsions de manière à maintenir ladite intensité à un minimum.

2. Procédé de découpe automatique au laser selon la revendication 1, **caractérisé en ce que** la fréquence ou la pression est modifiée par pas.

3. Procédé de découpe automatique au laser selon la revendication 2, **caractérisé en ce que** les pas de fréquence ont une valeur comprise entre 1 Hz et 3 Hz.

4. Procédé de découpe automatique au laser selon la revendication 2, **caractérisé en ce que** les pas de pression ont une valeur inférieure à 1 bar.

5. Procédé de découpe automatique au laser selon l'une quelconque des revendications 1 à 4, **caractérisé en ce que** la fréquence ou la pression est comprise entre des limites, et quand les limites sont atteintes, une augmentation de puissance du laser est imposée.

6. Procédé de découpe automatique au laser selon la revendication 3, **caractérisé en ce que** les limites de fréquence sont 2 Hz et 20 Hz.

7. Procédé de découpe automatique au laser selon la revendication 4, **caractérisé en ce que** les limites de pression sont 1 bar et 15 bars.

8. Procédé de découpe automatique au laser selon la revendication 5, **caractérisé en ce que** l'augmentation de puissance est temporaire.

9. Appareil de découpe, comprenant une tête de laser (9) et un auxiliaire de soufflage de gaz, l'auxiliaire comprenant un conduit d'alimentation en gaz (13, 15) et une buse (11, 29) de soufflage du gaz, en aval du conduit d'alimentation, la buse étant dirigée vers le lieu de découpe, l'auxiliaire comprenant un dispositif (12, 24 ; 141, 142, 143) de division du soufflage en impulsions discontinus et répétées, **caractérisé en ce que** le laser est un laser à faisceau continu d'une puissance supérieure à 1 kW et l'appareil comprend un détecteur (36) d'une puissance lumineuse rétrodiffusée par le lieu de découpe et un dispositif d'asservissement (39) soit de fréquence soit de pression, soit de fréquence et de pression des impulsions en réponse à des mesures du détecteur.

## Patentansprüche

1. Verfahren zum automatischen Laserschneiden, umfassend ein Aufblasen einer Gasmenge an eine Schneidstelle, um Schlacken und Gase wegzufegen, die durch das Schneiden produziert sind, wobei das Aufblasen in Pulsen realisiert wird, **dadurch gekennzeichnet, dass** es eine kontinuierliche Messung einer Rückstreuintensität von Laserlicht umfasst sowie eine Veränderung entweder einer Frequenz oder eines Drucks oder gleichzeitig einer Frequenz und eines Drucks der Pulse derart, dass die Intensität auf einem Minimum gehalten wird.

2. Verfahren zum automatischen Laserschneiden nach Anspruch 1, **dadurch gekennzeichnet, dass** die Frequenz oder der Druck schrittweise verändert wird.

3. Verfahren zum automatischen Laserschneiden nach Anspruch 2, **dadurch gekennzeichnet, dass** die Frequenzschritte einen Wert haben, der zwischen 1 Hz und 3 Hz enthalten ist.

4. Verfahren zum automatischen Laserschneiden nach Anspruch 2, **dadurch gekennzeichnet, dass** die Druckschritte einen Wert kleiner als 1 bar haben.

5. Verfahren zum automatischen Laserschneiden nach einem der Ansprüche 1 bis 4, **dadurch gekennzeichnet, dass** die Frequenz oder der Druck zwischen Grenzwerten enthalten ist, und wenn die Grenzwerte erreicht werden, eine Erhöhung der Laserleistung erzwungen wird.

6. Verfahren zum automatischen Laserschneiden nach Anspruch 3, **dadurch gekennzeichnet, dass** die Frequenz-Grenzwerte 2 Hz und 20 Hz sind.

7. Verfahren zum automatischen Laserschneiden nach Anspruch 4, **dadurch gekennzeichnet, dass** die Druck-Grenzwerte 1 bar und 15 bar sind.

8. Verfahren zum automatischen Laserschneiden nach Anspruch 5, **dadurch gekennzeichnet, dass** die Druckerhöhung vorübergehend ist.

9. Schneidgerät, umfassend einen Laserkopf (9) und eine Hilfseinheit zum Gasaufblasen, wobei die Hilfseinheit eine Gasversorgungsleitung (13, 15) und eine Gasaufblasdüse (11, 29) stromabwärts der Versorgungsleitung umfasst, wobei die Düse zu einer Schneidstelle hin orientiert ist, wobei die Hilfseinheit eine Vorrichtung (12, 24; 141, 142, 143) zum Unterteilen der Aufblasung in diskontinuierliche und wiederholte Pulse umfasst, **dadurch gekennzeichnet, dass** der Laser ein Laser mit kontinuierlichem Strahl mit einer Leistung größer als 1 kW ist, und dass das Gerät einen Detektor (36) für eine Lichtleistung umfasst, die von der Schneidstelle zurückgestreut wird, sowie eine Vorrichtung (39) zur Steuerung entweder der Frequenz oder des Drucks oder der Frequenz und des Drucks der Pulse in Antwort auf Messungen des Detektors.

## Claims

1. An automatic laser cutting method, comprising blowing a gas flow to a cutting location in order to sweep slag and gases produced by the cutting, the blowing being performed through pulses, **characterised in that** it consists in continuously measuring a laser light backscatter intensity and modifying either a frequency, a pressure or both a frequency and a pressure of the pulses so as to keep said intensity to a minimum.

2. The automatic laser cutting method according to claim 1, **characterised in that** the frequency or pressure is modified through steps.

3. The automatic laser cutting method according to claim 2, **characterised in that** the frequency steps have a value between 1 Hz and 3 Hz.

4. The automatic laser cutting method according to claim 2, **characterised in that** the pressure steps have a value lower than 1 bar.

5. The automatic laser cutting method according to any of claims 1 to 4, **characterised in that** the frequency or pressure is comprised between limits, and when the limits are reached, an increase in the laser power is imposed.

6. The automatic laser cutting method according to claim 3, **characterised in that** the frequency limits are 2 Hz and 20 Hz.

7. The automatic laser cutting method according to claim 4, **characterised in that** the pressure limits are 1 bar and 15 bars.

8. The automatic laser cutting method according to claim 5, **characterised in that** the increase in power is temporary.

9. A cutting apparatus, comprising a laser head (9) and a gas blowing auxiliary, the auxiliary comprising a gas supplying duct (13, 15) and a gas blowing nozzle (11, 29), downstream of the supplying duct, the nozzle being directed to the cutting location, the auxiliary comprising a device (12, 24; 141, 142, 143) for splitting blowing into discontinuous repeated pulses, **characterised in that** the laser is a continuous beam laser having a power higher than 1 kW and the apparatus comprises a detector (36) having a light power backscattered by the cutting location and a device (39) for controlling either frequency, a pressure, or a frequency and a pressure of the pulses in response to measurements of the detector.
